# FASCICULE DE BREVET EUROPEEN

(11) **EP 2 401 948 B1**
(45) Date de publication et mention de la délivrance du brevet: **02.10.2013**
(21) Numéro de dépôt: 11172098.3
(22) Date de dépôt: 30.06.2011
(51) Int. Cl.: A47J 37/06, A47J 37/07

(54) **Appareil de cuisson électrique avec cuve et réflecteur**
Elektrisches Kochgerät mit Kessel und Reflektor
Electric cooking apparatus with bowl and reflector

(30) Priorité: 01.07.2010 FR 1055308
(43) Date de publication de la demande: 04.01.2012
(73) Titulaire: SEB SA, 69130 Ecully (FR)
(72) Inventeur: Lequy, David, 73000 Chambéry le Vieux (FR); Kose, Torun, 74150 Rumilly (FR); Gouthière, Christophe, 74150 Rumilly (FR)
(74) Mandataire: Novagraaf Technologies

(56) Documents cités:
- EP-A1- 0 941 685
- FR-A1- 2 916 129
- US-A- 3 317 709
- US-A1- 2005 229 792
- US-A1- 2009 293 858

## Description

La présente invention concerne un appareil de cuisson électrique du type barbecue à plaque de cuisson.

Le document US 2009/293858 divulgue un appareil de cuisson du type comprenant une cuve adaptée à contenir un liquide (par exemple de l'eau) et présentant une ouverture supérieure, une plaque de cuisson, une résistance électrique disposée sous la plaque de cuisson, et un réflecteur thermique disposé sous la résistance électrique.

La présence du réflecteur permet de renvoyer un maximum de rayonnement thermique émis par la résistance électrique vers la plaque de cuisson. Cependant il présente l'inconvénient, quand la plaque de cuisson comporte des orifices d'écoulement des jus de cuisson, d'entraîner la dégradation des graisses de cuisson quand celles-ci viennent à son contact et, en conséquence, de générer des fumées. Une solution a été de réaliser des ouvertures au travers du réflecteur, ces ouvertures se trouvant au droit des orifices réalisés dans la plaque. De ce fait, les orifices de la plaque étant déjà judicieusement disposés entre les brins de la résistance électrique, les graisses tombent directement dans la cuve.

Cependant cette solution n'est pas idéale étant donné que les ouvertures réalisées dans le réflecteur, d'une part, diminuent considérablement la quantité de rayonnement réfléchi vers la plaque de cuisson, et, d'autre part, augmentent l'énergie transmise dans l'espace situé sous le réflecteur. Ce dernier inconvénient a pour conséquence que, lorsqu'un utilisateur ne met pas d'eau dans la cuve, les graisses venant à son contact sont dégradées et génèrent des fumées, et ce de façon d'autant plus importante que la quantité de rayonnement thermique atteignant la paroi de fond de la cuve a été augmentée par la présence des ouvertures dans le réflecteur.

La présente invention vise à réaliser un appareil de cuisson permettant d'évacuer les jus de cuisson hors de la plaque de cuisson, sans générer de fumées, et sans que les performances thermiques de l'appareil soient diminuées.

L'invention concerne un appareil de cuisson électrique comprenant un socle, une cuve qui est adaptée à contenir un liquide, qui est portée de façon amovible par le socle et qui comprend une ouverture supérieure, une plaque de cuisson qui comprend au moins un orifice d'écoulement des jus de cuisson, une résistance électrique qui est disposée sous la plaque de cuisson, et un réflecteur thermique qui est disposé sous la résistance électrique, caractérisé en ce que la résistance électrique et le réflecteur thermique sont disposés de façon amovible dans la cuve, l'ensemble des orifices d'écoulement étant disposé de sorte que les jus tombent dans la cuve, sans entrer en contact ni avec la résistance, ni avec le réflecteur.

De ce fait, en décalant la position de l'ensemble des orifices d'écoulement dans une zone qui ne se trouve pas au droit du réflecteur thermique ni de la résistance électrique, tout en étant dans la cuve, les jus de cuisson tombent directement dans celle-ci, sans entrer en contact ni avec la résistance, ni avec le réflecteur. De plus, le réflecteur gardant son aspect général de plaque, le rayonnement thermique atteignant la paroi de fond de la cuve est extrêmement limité, voir nul, les risques de dégradation des graisses et jus, en absence d'eau dans la cuve, sont quasi nuls.

D'autres particularités et avantages de la présente invention apparaitront dans le mode de réalisation donné à titre d'exemple non limitatif et illustré par les dessins mis en annexe dans lesquels :
La figure 1 est une vue en perspective de dessus d'un appareil de cuisson électrique conforme au mode de réalisation de la présente invention ;
La figure 2 est une vue similaire à la figure 1, le socle, la cuve, l'ensemble formé par le réflecteur et la résistance électrique, et la plaque de cuisson étant séparés les uns des autres ;
La figure 3 est une vue en coupe de l'appareil de la figure 1 ;
La figure 4 est une vue similaire à la figure 1, sans la plaque de cuisson ; et
La figure 5 est une vue de l'ensemble formé par le réflecteur et la résistance électrique.

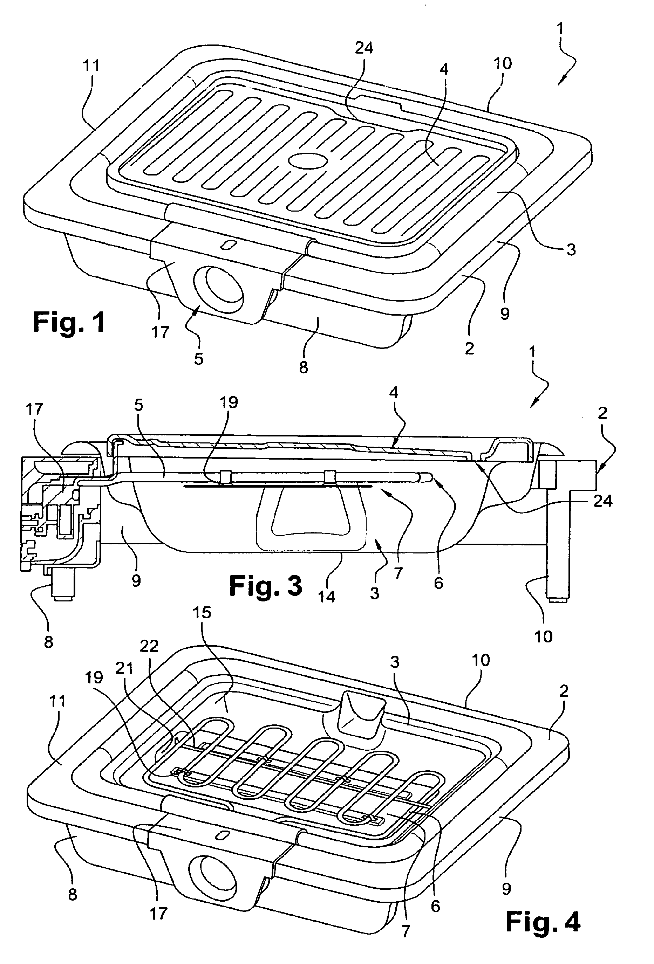

Tel qu'illustré à la figure 1, un appareil de cuisson électrique 1, en l'occurrence un grille viande 1, comprend un socle 2, une cuve (ou récipient) 3, une plaque de cuisson 4, un dispositif électrique de chauffe 5 muni d'une résistance électrique 6, et un réflecteur thermique 7.

La plaque de cuisson 4 est une plaque essentiellement pleine, ce n'est ni une grille ni un filet. La plaque de cuisson 4 est adaptée à recevoir un aliment pouvant produire des jus de cuisson (viande, poisson...) lorsqu'il est chauffé.

Le socle 2 sert de support aux autres éléments constitutifs de l'appareil 1. Ici, il est formé par quatre pans 8, 9, 10, 11 réunis de façon à former un parallélépipède rectangle creux à deux ouvertures se faisant face, l'une, supérieure 12 au niveau de laquelle se trouve la plaque de cuisson 4, la résistance électrique 6 et le réflecteur thermique 7, l'autre, inférieure 13 faisant face au support sur lequel l'appareil 1 repose.

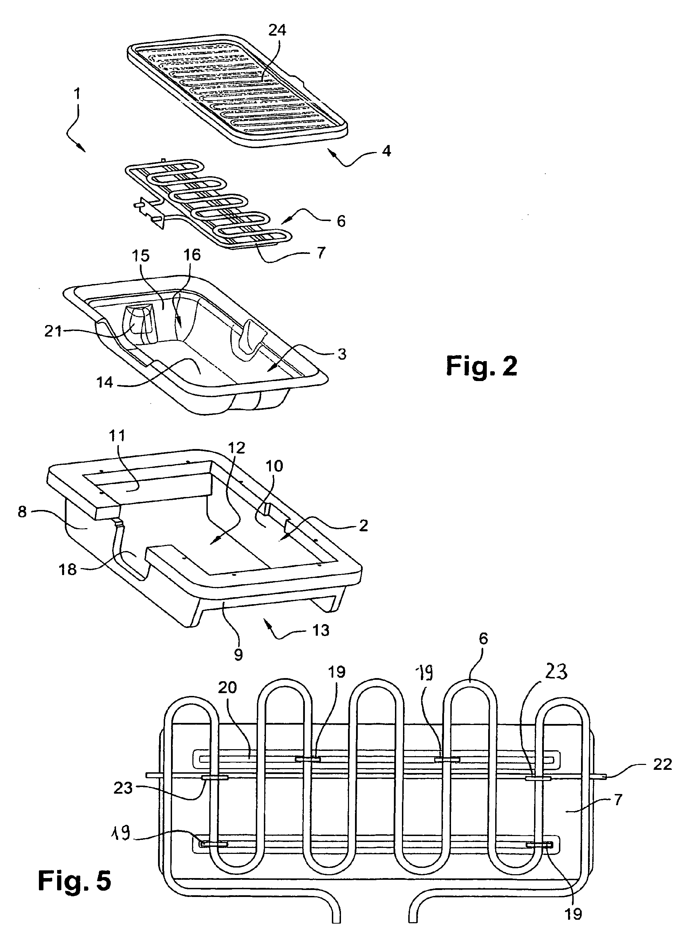

La cuve 3 est adaptée à contenir de l'eau et est portée par le socle 2 (ici, elle est disposée dans le socle 2). La cuve 3 comprend une paroi de fond 14 (dans le présent exemple, de forme rectangulaire), et une paroi latérale 15 (dans le présent exemple, une paroi à quatre pans) dont l'extrémité libre délimite une ouverture supérieure 16 opposée à la paroi de fond 14. L'ouverture supérieure 16 de la cuve 3 est disposée au niveau de l'ouverture supérieure 12 du socle 2. Comme illustré à la figure 2, le socle 2 et la cuve 3 sont amovibles l'un de l'autre.

Le dispositif électrique de chauffe 5 comprend la résistance électrique 6 et un boîtier de commande 17 permettant l'alimentation contrôlée de la résistance électrique 6. Le boitier 17 est porté par le socle 2, et il est logé dans une ouverture 18 réalisée dans le pan avant 8 du socle 2. La résistance électrique 6 est disposée au niveau de l'ouverture supérieure 16 de la cuve 3. Comme illustré à la figure 2, le socle 2, la cuve 3 et le dispositif électrique de chauffe 5 sont amovibles les uns des autres. Comme illustré aux figures 3 et 4, la résistance électrique 6 est disposée dans la cuve 3.

Le réflecteur 7 est disposé sous la résistance électrique 6 et il est situé par rapport à cette dernière de façon à optimiser le pourcentage de rayonnement thermique réfléchi vers la plaque de cuisson 4 et à limiter les transferts thermiques par conduction entre la résistance 6 et le réflecteur 7. Le réflecteur 7 est métallique et peut être en aluminium, en acier aluminié ou en acier inoxydable. Comme illustré à la figure 2, le socle 2, la cuve 3 et le réflecteur 7 sont amovibles les uns des autres.

Dans le but d'optimiser le rayonnement thermique, le réflecteur 7 est disposé à une distance de la résistance électrique 6 comprise entre 2 et 5 mm. Comme illustré aux figures 3 et 4, le réflecteur 7 est disposé dans la cuve 3.

Dans le présent mode de réalisation, le réflecteur 7 est fixé à la résistance électrique 6 par des zones de fixation 19. Cependant, afin de limiter les transferts par conduction, les zones de fixation 19 sont limitées en nombre (ici, il y a quatre zones de fixation 19), et géométriquement (ici, les zones de fixation 19 sont ponctuelles respectivement définies par une surface de petites dimensions). En d'autres termes, le réflecteur 7 est très localement fixé à la résistance 6, sur une surface qui peut correspondre, à l'endroit de chaque fixation, à environ 1-3cm² ou même moins. Il n'est en contact avec la résistance qu'au niveau de ces zones réduites de fixation. De façon plus précise, dans le présent exemple, la fixation est réalisée par des agrafes. En outre, le réflecteur 7 n'est en contact avec la résistance électrique 6 qu'au niveau de ces zones de fixation 19, comme illustré à la figure 3.

Par ailleurs, afin d'éviter toute déformation due à la chaleur, le réflecteur 7 comporte deux zones embouties 20 renforçant sa rigidité. Ici, chaque zone emboutie 20 a la forme générale d'une ligne s'étendant selon la direction longitudinale du réflecteur 7 et sert de point d'appui aux zones de fixation 19. De ce fait, la très grande majorité du réflecteur 7 se trouve plus éloigné de la résistance 16 que les zones embouties 20, ce qui permet d'éviter tout contact entre le réflecteur 7 et la résistance 6.

L'ensemble formé par le réflecteur 7 et la résistance électrique 6 est par ailleurs supporté par deux bossages 21 réalisés dans deux pans opposés de la paroi latérale 15 de la cuve 3. Ici, ce support est réalisé par la présence d'une tige métallique 22 fixée ponctuellement (c'est-à-dire, sur une surface très faible, ici, en deux endroits, et par deux agrafes 23) à la résistance électrique 6. La tige métallique 22 déborde du réflecteur thermique 7 de sorte que ce dernier ne rentre pas en contact avec la cuve 3

Comme illustré aux figures 3, 4 et 5, le réflecteur 7 a la forme générale d'une plaque, et ici, cette plaque est pleine.

Le réflecteur 7 couvre au moins 70 % (de préférence, au moins 80 %) de la zone de chauffe délimitée par les brins externes de la résistance électrique 6. Par ailleurs, malgré l'aspect divergent du rayonnement thermique, la proximité immédiate de la résistance électrique 6 du réflecteur 7 rend peu utile le fait d'étendre le réflecteur au-delà de 5 mm des brins extérieurs de la résistance 6 délimitant la zone de chauffe.

La disposition relative du réflecteur 7 et de la résistance électrique 6, à proximité immédiate, sans contact excepté aux zones de fixation 19, permet à performances égales avec un appareil classique, d'avoir un gain de puissance de l'ordre de 25%.

Comme illustré à la figure 2, le socle 2, la cuve 3 et l'ensemble formé par le dispositif électrique de chauffe 5 et le réflecteur 7 sont amovibles les uns des autres.

La plaque de cuisson 4 est également disposée au niveau de l'ouverture supérieure 16 de la cuve 3, au-dessus de la résistance électrique 6. Dans le présent mode de réalisation, la plaque 4 est disposée à distance de la résistance électrique 5 de sorte que le transfert thermique se fasse par rayonnement et non pas par conduction. La plaque de cuisson 4 comprend au moins un orifice d'écoulement 24 permettant l'évacuation des jus de cuisson (en l'occurrence, la plaque 4 ne comprend qu'un orifice 24; mais plusieurs orifices peuvent être prévus). L'orifice d'écoulement 24, ou chacun d'eux, peut se trouver dans la verticale (au droit) d'un espace d'écoulement qui est situé dans la cuve 3. Cet espace d'écoulement s'étend verticalement de la plaque 4 à la paroi de fond 14 de la cuve 3, et ne comporte ni le réflecteur 7 et les brins de la résistance 6. De ce fait, les jus de cuisson tombent dans la cuve, sans entrer en contact ni avec la résistance 6, ni avec le réflecteur 7. Le réflecteur 7 recouvrant la très grande majorité de la zone de chauffe de la résistance électrique (au moins 70 %), le rayonnement thermique provenant de la résistance électrique 6 atteignant la paroi de fond 14 de la cuve 3 est faible. Ainsi, même en absence d'eau dans la cuve 3, les risques de dégradation des graisses et jus sont quasi nuls.

Comme illustré à la figure 2, le socle 2, la cuve 3, la plaque de cuisson 4 et l'ensemble formé par le dispositif électrique de chauffe 5 et le réflecteur 7 sont amovibles les uns des autres.

Il serait possible que le réflecteur recouvre l'intégralité de la zone de chauffe de la résistance électrique. Dans un tel cas, le rayonnement thermique provenant de la résistance électrique atteignant la paroi de fond de la cuve serait nul.

Il serait également possible que l'orifice d'écoulement soit disposé au centre de la plaque, l'espace d'écoulement étant alors au centre de la cuve et disposé à l'intérieur à la fois du réflecteur possédant une ouverture centrale permettant le libre passage des jus et graisses, et de la zone de chauffe qui est alors globalement annulaire.

## Revendications

1. Appareil de cuisson électrique (1) comprenant :
- un socle (2),
- une cuve (3) qui est adaptée à contenir un liquide, qui est portée de façon amovible par le socle (2) et qui comprend une ouverture supérieure (16),
- une plaque de cuisson (4) qui comprend au moins un orifice d'écoulement (23) des jus de cuisson,
- une résistance électrique (6) qui est disposée sous la plaque de cuisson (4), et
- un réflecteur thermique (7) qui est disposé sous la résistance électrique (6),
- l'ensemble des orifices d'écoulement (23) étant disposé de sorte que les jus tombent dans la cuve (3), sans entrer en contact ni avec la résistance (6), ni avec le réflecteur (7),
**caractérisé en ce que** la résistance électrique (6) et le réflecteur thermique (7) sont disposés de façon amovible dans la cuve (3).

2. Appareil de cuisson (1) selon la revendication 1, **caractérisé en ce que** le réflecteur (7) est disposé à une distance comprise entre 2 et 5 mm de la résistance électrique (6).

3. Appareil de cuisson (1) selon l'une des revendications 1 ou 2, **caractérisé en ce que** le réflecteur (7) s'étend sous au moins 70 % d'une zone de chauffe délimitée par les brins extérieurs de la résistance (6).

4. Appareil de cuisson (1) selon la revendication 3, **caractérisé en ce que** le réflecteur (7) s'étend sous toute la résistance (6).

5. Appareil de cuisson (1) selon l'une des revendications 1 à 4, **caractérisé en ce que** le réflecteur (7) est formé par une plaque.

6. Appareil de cuisson (1) selon l'une des revendications 1 à 5, **caractérisé en ce que** le réflecteur (7) est fixé ponctuellement à la résistance (6) et est en contact avec cette dernière qu'au niveau des points de fixation.

7. Appareil de cuisson (1) selon l'une des revendications 1 à 6, **caractérisé en ce que** le réflecteur (7) comporte une zone emboutie renforçant sa rigidité.

8. Appareil de cuisson électrique (1) selon l'une des revendications 1 à 7, **caractérisé en ce que** la résistance électrique (6) est disposée à distance de la plaque de cuisson (4) de façon à transmettre l'énergie thermique par rayonnement.

9. Appareil de cuisson (1) selon l'une des revendications 1 à 8, **caractérisé en ce que** l'ensemble des orifices d'écoulement (23) se trouve à la périphérie de la plaque de cuisson (4).

10. Appareil de cuisson (1) selon l'une des revendications 1 à 8, **caractérisé en ce que** l'ensemble des orifices d'écoulement (23) se trouve au centre de la plaque de cuisson (4).

## Patentansprüche

1. Elektrisches Gargerät (1), das enthält:
- einen Sockel (2),
- eine Wanne (3), die geeignet ist, um eine Flüssigkeit zu enthalten, die lösbar vom Sockel (2) getragen wird, und die eine obere Öffnung (16) enthält,
- eine Garplatte (4), die mindestens eine Ausflussöffnung (23) der Garsäfte enthält,
- einen elektrischen Widerstand (6), der unter der Garplatte (4) angeordnet ist, und
- einen Wärmereflektor (7), der unter dem elektrischen Widerstand (6) angeordnet ist,
- wobei die Gesamtheit der Ausflussöffnungen (23) so angeordnet ist, dass die Säfte in die Wanne (3) fallen, ohne mit dem Widerstand (6) oder dem Reflektor (7) in Kontakt zu kommen,
**dadurch gekennzeichnet, dass** der elektrische Widerstand (6) und der Wärmereflektor (7) lösbar in der Wanne (3) angeordnet sind.

2. Gargerät (1) nach Anspruch 1, **dadurch gekennzeichnet, dass** der Reflektor (7) in einem Abstand zwischen 2 und 5 mm vom elektrischen Widerstand (6) angeordnet ist.

3. Gargerät (1) nach einem der Ansprüche 1 oder 2, **dadurch gekennzeichnet, dass** der Reflektor (7) sich unter mindestens 70 % einer Heizzone erstreckt, die von den äußeren Drähten des Widerstands (6) begrenzt wird.

4. Gargerät (1) nach Anspruch 3, **dadurch gekennzeichnet, dass** der Reflektor (7) sich unter dem ganzen Widerstand (6) erstreckt.

5. Gargerät (1) nach einem der Ansprüche 1 bis 4, **dadurch gekennzeichnet, dass** der Reflektor (7) von einer Platte geformt wird.

6. Gargerät (1) nach einem der Ansprüche 1 bis 5, **dadurch gekennzeichnet, dass** der Reflektor (7) punktförmig am Widerstand (6) befestigt und mit diesem nur im Bereich der Befestigungspunkte in Kontakt ist.

7. Gargerät (1) nach einem der Ansprüche 1 bis 6, **dadurch gekennzeichnet, dass** der Reflektor (7) eine seine Steifheit verstärkende tiefgezogene Zone aufweist.

8. Elektrisches Gargerät (1) nach einem der Ansprüche 1 bis 7, **dadurch gekennzeichnet, dass** der elektrische Widerstand (6) in Abstand zur Garplatte (4) angeordnet ist, um die Wärmeenergie durch Strahlung zu übertragen.

9. Gargerät (1) nach einem der Ansprüche 1 bis 8, **dadurch gekennzeichnet, dass** die Gesamtheit der Ausflussöffnungen (23) sich am Umfang der Garplatte (4) befindet.

10. Gargerät (1) nach einem der Ansprüche 1 bis 8, **dadurch gekennzeichnet, dass** die Gesamtheit der Ausflussöffnungen (23) sich in der Mitte der Garplatte (4) befindet.

## Claims

1. Electric cooking apparatus (1) comprising:
- a base (2),
- a bowl (3) that is suitable for containing a liquid, that is supported removably by the base (2) and that comprises an upper opening (16),
- a hotplate (4) which comprises at least one orifice (23) for draining the cooking juices,
- an electrical resistor (6) that is placed beneath the hotplate (4), and
- a heat reflector (7) that is placed beneath the electrical resistor (6),
- all of the draining orifices (23) being placed such that the juices fall into the bowl (3) without coming into contact either with the resistor (6) or with the reflector (7),
**characterized in that** the electrical resistor (6) and the heat reflector (7) are placed removably in the bowl (3).

2. Cooking apparatus (1) according to Claim 1, **characterized in that** the reflector (7) is placed at a distance of between 2 and 5 from the electrical resistor (6).

3. Cooking apparatus (1) according to one of Claims 1 and 2, **characterized in that** the reflector (7) extends beneath at least 70% of a heating zone delimited by the external strands of the resistor (6).

4. Cooking apparatus (1) according to Claim 3, **characterized in that** the reflector (7) extends beneath the whole resistor (6).

5. Cooking apparatus (1) according to one of Claims 1 to 4, **characterized in that** the reflector (7) is formed by a plate.

6. Cooking apparatus (1) according to one of Claims 1 to 5, **characterized in that** the reflector (7) is attached in places to the resistor (6) and is in contact with the latter only at the attachment points.

7. Cooking apparatus (1) according to one of Claims 1 to 6, **characterized in that** the reflector (7) comprises a pressed zone reinforcing its rigidity.

8. Electric cooking apparatus (1) according to one of Claims 1 to 7, **characterized in that** the electrical resistor (6) is placed at a distance from the hotplate (4) so as to transmit the thermal energy by radiation.

9. Cooking apparatus (1) according to one of Claims 1 to 8, **characterized in that** all of the draining orifices (23) are at the periphery of the hotplate (4).

10. Cooking apparatus (1) according to one of Claims 1 to 8, **characterized in that** all of the draining orifices (23) are at the centre of the hotplate (4).
